# EUROPÄISCHE PATENTSCHRIFT

(11) **EP 1 524 463 B1**
(45) Veröffentlichungstag und Bekanntmachung des Hinweises auf die Patenterteilung: **10.01.2007**
(21) Anmeldenummer: 04023753.9
(22) Anmeldetag: 06.10.2004
(51) Int. Cl.: F16L 3/137, F16L 3/233

(54) **Halterung für langgestreckte Gegenstände, insbesondere Kabel**
Device for supporting elongated objects, particularly cables
Dispositif pour le support d'objets allongés, notamment de câbles

(30) Priorität: 17.10.2003 DE 10349046
(43) Veröffentlichungstag der Anmeldung: 20.04.2005
(73) Patentinhaber: Newfrey LLC, Newark, Delaware 19711 (US)
(72) Erfinder: Miehlke, Karl-Heinz, 52249 Eschweiler (DE); Wimmer, Karin, 61231 Bad Nauheim (DE); Zoltner, Klaus, 63743 Aschaffenburg (DE); Schmidt, Michael, 35463 Fernwald (DE)
(74) Vertreter: Haar, Lucas Heinz Jörn

(56) Entgegenhaltungen:
- EP-A- 0 602 548
- DE-A1- 19 540 418
- FR-A1- 2 771 783
- FR-A5- 2 199 362
- GB-A- 1 250 057
- US-A- 5 224 244
- US-A- 5 752 682
- US-A- 5 759 004
- US-A- 6 105 908

## Beschreibung

Die Erfindung betrifft eine Halterung für langgestreckte Gegenstände, insbesondere Kabel oder dergleichen, mit einem Spannband, das zu einem den Gegenstand umschlingenden und durch einen Verschluß zusammengehaltenen Ring formbar ist, und mit einem von dem Spannband getrennten Halter zum Befestigen des Spannbandes an einem Träger.

Halterungen der angegebenen Art sind vornehmlich zur Befestigung von Kabelbäumen in Fahrzeugen geeignet. Moderne Fahrzeuge enthalten eine Vielzahl elektrischer Bauelemente. Diese Bauelemente müssen mit elektrischer Energie versorgt werden, und viele dieser Bauelemente haben zusammenhängende Funktionen und müssen daher miteinander verbunden werden. Aus diesen Gründen sind in Fahrzeugen umfangreiche, elektrische Verkabelungen erforderlich, die zu Kabelbäumen zusammengefasst werden und dann als eigenständige Komponenten in den Fahrzeugen montiert werden. Hierbei kommt es darauf an, daß die Kabelbäume in den Fahrzeugen vorschriftsmäßig ausgerichtet und sicher gehalten werden können. Zudem soll der Montagevorgang möglichst schnell und einfach durchführbar sein.

Eine aus JP 09-159061 bekannte Halterung zur Befestigung eines Kabelbaumes besteht aus einem Spannband mit einem an einem Ende des Spannbandes angebrachten Schloß, in das das andere Ende des Spannbandes einführbar und in einer beliebigen Spannstellung festhaltbar ist. An dem Spannschloß ist außerdem eine Halteöse mit Sperrfingern angebracht, die auf einen an der Montagestelle vorhandenen Gewindezapfen aufsteckbar ist. Soll diese bekannte Halterung zur Herstellung vorgefertigter Kabelbäume verwendet werden, so besteht das Problem, daß die Halterung in einer genau definierten Winkelstellung an dem Kabelbaum angebracht werden muß, da ein nachträgliches Drehen der Halterung in die richtige Montagelage gegenüber dem Kabelbaum nicht mehr oder nur schwer möglich ist. Zudem steht nach dem Anbringen der Halterung an dem Kabelbaum die Halteöse von diesem ab. Dies ist sowohl bei der Herstellung des Kabelbaumes als auch bei der Montage des Kabelbaumes hinderlich, insbesondere wenn dieser noch durch Öffnungen in der Fahrzeugkarosserie hindurchgesteckt werden muß.

Aus US 5,112,013 ist eine Halterung der angegebenen Art bekannt, bei der Halter und Spannband voneinander getrennt sind. Zur Verbindung beider Teile miteinander weist das Spannband einen sich quer zu seiner Längsrichtung erstreckenden Schuh auf, der in eine an dem Halter ausgebildete, hinterschnittene Nut einsteckbar und zum Toleranzausgleich in dieser Nut längs verschiebbar ist. Der Halter ist mit einem Steckzapfen versehen, der in eine Bohrung eines Trägerteiles einsteckbar ist. Vor der Montage des Kabelbaumes an dem Trägerteil wird der Halter auf den Schuh des Spannbandes gesteckt und in axialer Richtung passend zur Bohrung ausgerichtet. Dann erfolgt die Montage durch Eindrücken des Steckzapfens in die Bohrung im Trägerteil. Auch bei dieser Halterung besteht das Problem, daß das Spannband bei der Anbringung an dem Kabelbaum in eine definierte Drehwinkelstellung gebracht werden muß, da das Spannband nach seiner Montage gegenüber dem Kabelbaum nicht mehr verschoben werden kann.

Weiterhin ist aus der dem Oberbegriff des Anspruchs 1 zugrunde liegenden DE 195 40 418 A1 eine Halterung für lang gestreckte Gegenstände, insbesondere Kabel oder dergleichen bekannt, der ein den Gegenstand umschlingende und verschließbares Spannband und einen von dem Spannband getrennten Halter zum Befestigen des Spannbands an einem Träger aufweist. Der Halter hat ein rechteckiges Halteteil, das an den Eckbereichen seiner gegenüber liegenden Seitenränder jeweils einen winkelförmigen Halteabschnitt hat, welcher das Spannband untergreift. Durch die Halte abschnitte ist am Halteteil eine Öffnung gebildet, durch die das Spannband durchführbar und in Längsrichtung verschiebbar ist. Auf seiner Innenseite hat das Spannband eine Vielzahl von nebeneinander liegenden, rippenartigen Erhebungen, die in Längsrichtung der gehaltenen Gegenstände verlaufen. Der bekannte Halter kann sich bei der Montage gegenüber dem Spannband leicht verschieben. Dies ist für eine Ausrichtung des Halters in einer definierten Montageposition nachteilig.

Der Erfindung liegt die Aufgabe zugrunde, eine Halterung der eingangs genannten Art zu schaffen, die eine einfache Anbringung der Halterung an einem langgestreckten Gegenstand und eine einfache Befestigung des langgestreckten Gegenstandes an einem hierfür vorgesehenen Träger ermöglicht.

Die Aufgabe wird nach der Erfindung durch eine Halterung mit den in Patentanspruch 1 angegebenen Merkmalen gelöst.

Nach der Erfindung weist der dem Spannband zugekehrte Abstützbereich des Halters ein Federelement auf, das bei der Befestigung des Spannbandes an dem Halter durch das Spannband gespannt wird. Hierdurch wird eine durch Federkraft spielfrei gehaltene Verbindung zwischen dem Spannband und dem Halter erreicht. Mit der Erfindung wird außerdem eine Halterung der angegebenen Art geschaffen, bei welcher der Halter an einer Vielzahl von Befestigungsstellen mit dem Spannband verbunden werden kann, so daß für jede Einbausituation eine passende Befestigungsstelle verfügbar ist. Eine vorherige Ausrichtung des Spannbands in Umfangsrichtung ist daher bei der Befestigung des Spannbandes an dem Kabel nicht erforderlich. Nach der Montage des Spannbandes kann der Halter entweder erst mit dem Spannband und dann mit dem Träger oder erst mit dem Träger und dann mit dem Spannband verbunden werden, so daß je nach Anwendung einfache Montagemöglichkeiten für einen von dem Spannband umschlungenen Kabelbaum zur Verfügung stehen. Das erfindungsgemäße Spannband ist besonders kostengünstig herstellbar, da es nicht mit aufwendigen Haltemitteln versehen ist. Auch von einer Spule abgewickelte und auf Länge geschnittene Spannbänder, deren Enden durch ein doppelt wirkendes Schloß miteinander verbunden werden, können zur Herstellung der erfindungsgemäßen Halterung verwendet werden. Letzteres ist besonders vorteilhaft für eine automatische Montage des Spannbandes.

Der erfindungsgemäße Halter weist wenigstens einen Finger auf, der mit einem Ende das Spannband auf der dem langgestreckten Gegenstand zugekehrten Innenseite teilweise oder vollständig übergreift. Die Erfindung sieht weiterhin vor, daß dem Ende des Fingers ein Bereich des Halters gegenüberliegt, der eine Abstützung für die Außenseite des Spannbandes bildet. Dies hat den Vorteil, daß herkömmliche Spannbänder verwendet werden können. Der für den Finger erforderliche Freiraum zwischen Spannband und umschlungenem Gegenstand kann durch eine lose Montage des Spannbandes an dem Gegenstand erzeugt werden, wobei das Spannband nach dem Anbringen des Halters in der Regel nachgespannt werden muß.

Eine vorteilhafte Ausgestaltung der Erfindung sieht vor, daß das Spannband auf seiner Innenseite in regelmäßigen, kurzen Abständen sich quer zur Längsrichtung des Spannbandes erstreckende Aussparungen hat, die so groß bemessen sind, daß sie nach der festen Umschlingung eines Gegenstandes eine Öffnung zur Aufnahme des Fingerendes des Halters bilden. In diesem Fall kann das Spannband bei seiner Montage sogleich fest auf dem Kabel oder dergleichen Gegenstand festgespannt werden.

Nach einem weiteren Vorschlag der Erfindung weist der Halter zwei Finger auf, die beiderseits eines Abstützbereiches spiegelbildlich zueinander angeordnet sind und abgewinkelte Fingerenden haben, die das Spannband von zwei Seiten auf der Innenseite übergreifen. Diese Gestaltung hat den Vorteil, daß größere Haltekräfte und insbesondere größere Biegemomente an der Verbindungsstelle zwischen Halter und Spannband übertragen werden können. Zudem kann das Spannband durch eine quer zur Längserstreckung des umschlungenen Gegenstandes gerichtete Bewegung mit dem Halter verbunden werden. Um einen solchen Montagevorgang zu erleichtern, kann vorgesehen sein, daß die abgewinkelten Enden der Finger Endflächen haben, die so geneigt sind, daß der Abstand zwischen den Endflächen mit der Entfernung der Endflächen von dem Abstützbereich des Halters zunimmt. Alternativ oder ergänzend hierzu kann vorgesehen sein, daß das Spannband einen trapezförmigen Querschnitt hat, dessen breitere, parallele Seite auf der Innenseite des Spannbandes liegt. Durch die beschriebene Gestaltung der Endflächen der Fingerenden bzw. die Querschnittsform des Spannbandes werden beim Andrücken des Spannbandes an den Halter die Fingerenden auseinandergespreizt, so daß sie über die Seitenflächen des Spannbandes hinweggleiten und schließlich das Spannband auf der Innenseite umgreifen.

Der für das Eingreifen der Fingerenden des Halters erforderliche Freiraum kann nach einem weiteren Vorschlag der Erfindung auch dadurch geschaffen werden, daß die seitlichen Längsränder des Spannbandes der Spannbandinnenseite zugekehrte, sich längs des Spannbandes erstreckende Ausnehmungen haben. Die Ausnehmung kann durch eine vorzugsweise rechtwinklige Abstufung der seitlichen Ränder des Spannbandes gebildet sein. Ist nur eine geringe Haltekraft gefordert, so kann der Freiraum für das Eingreifen der Fingerenden auch durch einen trapezförmigen Querschnitt des Spannbandes geschaffen werden, wobei die kürzere, parallele Seite des Querschnitts sich auf der Innenseite des Spannbandes befindet.

Die Erfindung wird nachfolgend anhand eines Ausführungsbeispiels näher erläutert, das in der Zeichnung dargestellt ist. Es zeigen
- Figur 1: ein Spannband für eine erste Ausgestaltung einer erfindungsgemäßen Halterung,
- Figur 2: eine Vorderansicht eines Halters für die Halterung,
- **Figur 3**: eine Seitenansicht der Halters gemäß Figur 2,
- **Figur 4**: einen Querschnitt durch die Verbindungsstelle zwischen Halter und Spannband der ersten Ausgestaltung einer erfindungsgemäßen Halterung,
- Figur 5: die Befestigung eines Kabelbaumes an einer Platte mit Hilfe der ersten Ausgestaltung einer erfindungsgemäßen Halterung,
- Figur 6: einen Querschnitt durch die Befestigungsstelle einer zweiten Ausgestaltung einer erfindungsgemäßen Halterung,
- Figur 7: einen Querschnitt durch die Befestigungsstelle einer dritten Ausgestaltung einer erfindungsgemäßen Halterung,
- Figur 8: die Anordnung einer vierten Ausgestaltung einer erfindungsgemäßen Halterung an einem Kabel,
- Figur 9: einen Abschnitt einer anderen Ausführungsform eines Spannbandes für eine erfindungsgemäße Halterung,
- Figur 10: eine Halterung mit einem genuteten Spannband und
- Figur 11: eine Halterung mit einem Spannband mit Befestigungsrippe.

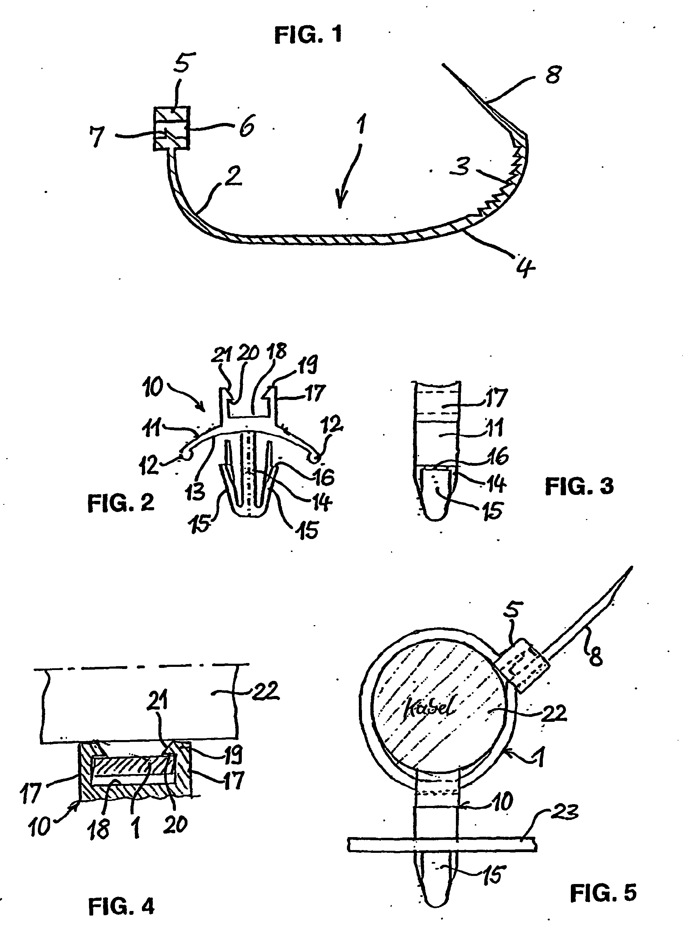

Figur 1 zeigt ein Spannband 1 üblicher Ausgestaltung, welches sich zur Bildung der erfindungsgemäßen Halterung eignet. Das Spannband 1 besteht aus einem flexiblen Streifen von rechteckigem Querschnitt und ist aus einem zugfesten Material, insbesondere Kunststoff, hergestellt. Auf seiner um die zu haltenden Gegenstände herumlegbaren Innenseite 2 weist das Spannband 1 wenigstens auf einem Teil seiner Länge eine sägezahnartige Verzahnung 3 auf. Die Außenseite 4 des Spannbandes 1 ist glatt. An seinem einen Ende weist das Spannband 1 ein Schloß 5 mit einer Öffnung 6 auf. In der Öffnung 6 ist ein Sperrzahn 7 angeordnet. Das entgegengesetzte Ende 8 des Spannbandes 1 ist zum Ende hin spitz zulaufend, um das Einstecken in das Schloß 5 zu erleichtern.

Zum Befestigen beispielsweise an einem Kabel wird das Spannband 1 um das Kabel herumgelegt und dann das Ende 8 durch die Öffnung 6 des Schlosses 5 hindurchgesteckt. An dem aus der Öffnung 6 herausragenden Ende 8 wird dann das Spannband 1 so weit durch das Schloß 5 hindurchgezogen, bis es das Kabel fest umschließt. Beim Spannen überspringt der Sperrzahn 7 die an ihm vorbeibewegten Zähne der Verzahnung 3. In der entgegengesetzten Richtung verhakt sich der Sperrzahn 7 in der Verzahnung 3 und hält dadurch das Spannband 1 in der jeweils erreichten Spannstellung im Schloß 5 fest.

Die Figuren 2 und 3 zeigen einen Halter 10, der zum Befestigen des Spannbandes 1 an einem plattenförmigen Träger bestimmt ist. Der Halter 10 weist einen rechteckigen, in Längsrichtung gekrümmten Flansch 11 auf, der an seinen schmalen Enden wulstförmige Rippen 12 hat, die die konkave Krümmungsfläche 13 des Flansches 11 überragen. In der Mitte der Krümmungsfläche 13 befindet sich ein zu dieser senkrechter Zapfen 14, an dessen freistehendem Ende zwei federnde Sperrfinger 15 angebracht sind, die sich in spiegelbildlicher Anordnung beiderseits des Zapfens 14 in Richtung der Krümmungsfläche 13 erstrecken. Die Sperrfinger 15 sind auf ihrer Außenseite jeweils mit einer Stufe versehen, durch die eine dem Flansch 11 zugekehrte Sperrfläche 16 gebildet ist.

Auf seiner konvex gekrümmten Seite weist der Flansch 11 zwei von ihm abstehende Finger 17 auf, die beiderseits der Flanschmitte parallel und spiegelbildlich zueinander angeordnet sind und welche die gleiche Breite haben wie der Flansch 11. Zwischen den Fingern 17 befindet sich eine ebene Anlagefläche 18. In Höhe der Anlagefläche 18 haben die Finger 17 einen Abstand voneinander, der etwa der Breite des zu haltenden Spannbandes 1 entspricht. Die Finger 17 haben rechtwinklig abgebogene Fingerenden 19, die sägezahnartig gestaltet sind und der Anlagefläche 18 zugekehrte Halteflächen 20 bilden. Die einander gegenüberliegenden Endflächen 21 der Fingerenden 19 sind zueinander geneigt, wobei der Abstand zwischen den Endflächen 21 mit der Entfernung von der Anlagefläche 18 zunimmt.

In den Figuren 4 und 5 ist gezeigt, wie ein Kabel 22 mittels der beschriebenen Halterung an einem plattenförmigen Träger 23 befestigt wird. Das Spannband 1 wird in einem eigenständigen Montagevorgang um das Kabel 22 herumgelegt und zu einem das Kabel 22 lose umgebenden Ring geschlossen. Der Halter 10 kann entweder erst an dem montierten Spannband 1 und dann an dem Träger 23 oder erst an dem Träger 23 und dann an dem Spannband 1 befestigt werden. Zur Verbindung des Halter 10 mit dem Spannband 1 wird der Halter 10 mit seinen Fingern 17 so an das Spannband 1 angesetzt, daß die äußeren Längskanten des Spannbandes 1 die Endflächen 21 der Fingerenden 19 berühren. Anschließend werden Halter 10 und Spannband 1 gegeneinandergedrückt, wobei das Spannband 1 über die Endflächen 21 hinweggleitet und dabei die Fingerenden 19 so weit auseinanderdrückt, daß es zwischen ihnen hindurch in den Zwischenraum zwischen den Fingern 17 gelangen kann. Sobald sich das Spannband 1 in dem Zwischenraum zwischen den Fingern 17 befindet, federn diese in ihre Ausgangslage zurück und übergreifen mit ihren Fingerenden 19 das Spannband 1 auf seiner Innenseite. Mit ihren Halteflächen 20 halten die Fingerenden 19 das Spannband 1 in der erreichten Lage an dem Halter 10 fest.

Zur Befestigung an dem Träger 23 wird der Halter 10 mit seinen Sperrfingern 15 in eine im Träger 23 vorgesehene Montageöffnung gesteckt. Die Montageöffnung ist so groß bemessen, daß die Sperrfinger 15 beim Einstecken des Halters 10 zusammengedrückt werden. Der Halter 10 wird so tief in die Montageöffnung hineingedrückt, bis die Rippen 12 des Flansches 11 fest an dem Träger 23 anliegen und die Sperrfinger 15 mit ihren Sperrflächen 16 auf der Rückseite des Trägers 23 aus der Montageöffnung austreten, wobei sie ganz oder teilweise in ihre Ausgangslage zurückfedern. Die Sperrflächen 16 gelangen hierdurch in Eingriff mit der Rückseite des Trägers 23 und halten dadurch den Halter 10 in der Montageöffnung fest. Bei diesem Montagevorgang wird auch der Flansch 11 durch das Andrücken an den Träger 23 nach Art einer Blattfeder elastisch verformt und bewirkt dadurch eine spielfreie Verspannung zwischen dem Halter 10 und dem Träger 23.

Durch die beschriebenen Montagevorgänge wird das Kabel 22, wie in Figur 5 gezeigt, mit dem Träger 23 verbunden. War das Spannband 1 zunächst nur lose um das Kabel 22 herumgelegt, um genügend Freiraum für das Eingreifen der Fingerenden 19 zwischen dem Spannband 1 und dem Kabel 22 zu schaffen, so kann das Spannband 1 nach der Montage des Halters 10 durch Ziehen an dem Ende 8 nachgespannt werden, um eine ausreichend feste Verbindung zwischen dem Kabel 22, dem Spannband 1 und dem Halter 10 zu erreichen.

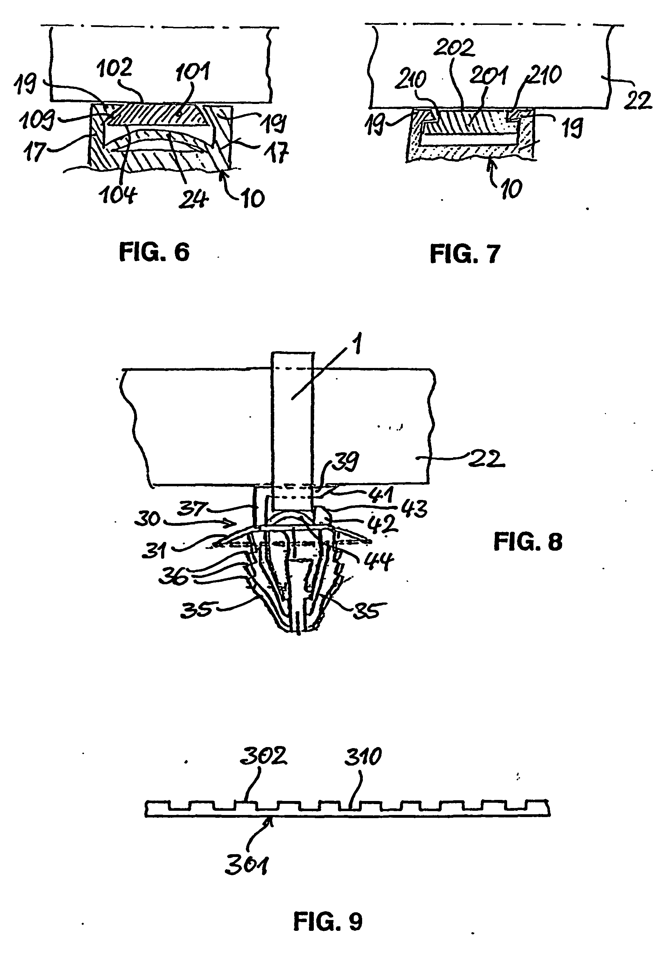

Bei dem in Figur 6 gezeigten Ausführungsbeispiel hat das Spannband 101 einen trapezförmigen Querschnitt, wobei die kürzere, parallele Seite des trapezförmigen Querschnittes sich auf der Innenseite 102 des Spannbandes 101 befindet. Die Seitenflächen 109 des Spannbandes 101 bilden mit der Innenseite 102 jeweils einen Winkel von etwa 135°. Durch diese Querschnittsform des Spannbandes 101 wird an den Seitenflächen 109 ein Hinterschnitt erzeugt, der zum Eingreifen entsprechend geformter Fingerenden 19 der Finger 17 des Halters 10 dient.

Der Halter 10 weist bei dem in Figur 6 gezeigten Ausführungsbeispiel in dem Zwischenraum zwischen den Fingern 17 ein Federelement 24 in Form einer gebogenen Blattfeder auf, welches sich an der Außenseite 104 des Spannbandes 101 abstützt und in der Einbaulage das Spannband 101 spielfrei mit dem Halter 10 verspannt.

Bei dem in Figur 7 gezeigten Ausführungsbeispiel ist der Halter 10 mit einem Spannband 201 kombiniert, welches an seinen seitlichen Längsrändern auf der Innenseite 202 jeweils eine sich längs des Spannbandes 201 erstreckende Ausnehmung 210 hat, die durch eine rechtwinklige Abstufung der seitlichen Ränder des Spannbandes 201 gebildet ist. Beide Ausnehmungen 210 sind so breit und hoch bemessen, daß die rechtwinklig abgebogenen Fingerenden 19 des Halters 10 darin Platz haben. Auf diese Weise bleiben die Ausnehmungen 210 für die Fingerenden 19 auch dann zugänglich, wenn das Spannband 201 fest um das zu haltende Kabel 22 herumgespannt ist. Das Spannband 201 muß daher für die Befestigung des Halters 10 nicht lose sein. Das gleiche gilt auch für das Spannband 101 in Figur 6.

In Figur 8 ist ein Halter 30 mit einem tellerförmigen Flansch 31 und mehreren Sperrfingern 35 gezeigt, die jeweils drei Sperrflächen 36 haben und zur Verankerung des Halters 30 in einer Bohrung in einem Träger dienen. Auf der den Sperrfingern 35 abgekehrten Seite ist an dem Flansch 31 ein von diesem abstehender Finger 37 mit einem rechtwinklig abgebogenen Fingerende 39 angebracht, das sich im wesentlich parallel zum Flansch 31 erstreckt. Das Fingerende 39 ist mit einer schrägen Endfläche 41 versehen, die das Einführen des Fingerendes 39 in den Zwischenraum zwischen einem Kabel 22 und einem dieses umgreifenden Spannband 1 erleichtern soll. Zwischen dem Endbereich des Fingerendes 39 und dem Flansch 31 befindet sich an dem Flansch 31 ein Nocken 42, der eine zur Endfläche 41 entgegengesetzt geneigte Endfläche 43 hat. Der Abstand des Nockens 42 von dem Fingerende 39 ist kleiner als die Dicke des mit dem Halter 10 zusammenwirkenden Spannbandes 1. Von dem Finger 37 hat der Nocken 42 einen Abstand, der gleich oder größer ist als die Breite des Spannbandes 1. Zwischen dem Finger 37 und dem Nocken 42 befindet sich außerdem ein als Blattfeder ausgebildetes Federelement 44.

Wie aus Figur 8 zu ersehen, wird der Halter 30 mit dem Fingerende 39 in einen zwischen der Innenseite des Spannbandes 1 und dem Kabel 22 freigelassenen Zwischenraum hineingesteckt, wobei das Spannband 1 unter elastischer Verformung des Fingerendes 39 über den Nocken 42 hinweggleitet. In der dargestellten Montageendlage durchgreift das Fingerende 39 das Spannband 1 auf der Innenseite, wobei es durch den seitlichen, am Spannband 1 anliegenden Nocken 42 gegen selbsttätiges Lösen gesichert ist. Zudem ist der Halter 30 durch das Federelement 44 an der Außenseite des Spannbandes 1 abgestützt.

Da das Fingerende 39 das Spannband 1 vollständig übergreift, ist die Anbringung des Halters 30 bei der in Figur 1 gezeigten Ausbildung des Spannbandes 1 nur möglich, wenn das Spannband 1 das Kabel 22 noch nicht fest umschließt. Nach der Anbringung des Halters 30 kann das Spannband 1 auf dem Kabel 22 festgespannt werden.

Figur 9 zeigt eine Ausführungsform eines Spannbandes 301, welches auch vor der Montage des Halters 30 fest um das Kabel herumgespannt werden kann. Das Spannband 301 weist auf seiner Innenseite 302 in regelmäßigen Abständen sich quer über die Breite des Spannbandes 301 erstreckende Ausnehmungen 310 auf, deren Querschnittsabmessungen so groß bemessen sind, daß sie auch nach dem Umspannen eines Kabels eine zum Ein- oder Durchstecken des Fingerendes 39 ausreichend große Öffnung bilden. Da der Abstand der Ausnehmungen 310 recht klein bemessen sein kann, läßt sich auch mit dieser Ausgestaltung des Spannbandes eine genügend große Zahl von Befestigungsstellen für eine jeweils passend ausgerichtete Anbringung des Halters verwirklichen.

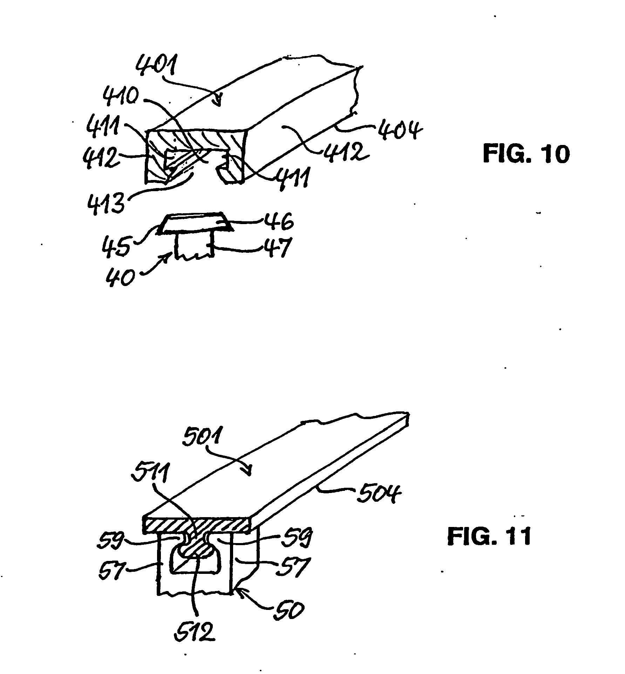

Figur 10 zeigt ein Beispiel einer Halterung mit einem Spannband 401, das auf seiner Außenseite 404 eine Längsnut 410 hat. Die Längsnut 410 ist mit einem Hinterschnitt versehen, der durch im Querschnitt rechteckige Ausnehmungen 411 in den Seitenwänden 412 der Längsnut 410 gebildet ist. Die Längsnut 410 weist eine Eintrittsöffnung 413 auf, die eine sich nach außen erweiterende Querschnittsform hat.

Zur Befestigung des Spannbandes 401 dient ein Halter 40 mit einem T-förmigen Kopf 45, der aus einer Kopfplatte 46 und einem Schaft 47 besteht. Die Kopfplatte 46 hat die Form eines flachen Kegelstumpfes, der sich zum Ende des Kopfes 45 hin verjüngt und dessen größter Durchmesser der Breite der Längsnut 410 des Spannbandes 401 im Bereich des Hinterschnittes entspricht. Die Dicke der Kopfplatte 46 ist gleich oder kleiner als die Breite der Ausnehmungen 411.

Anstelle einer runden Form kann die Kopfplatte 46 auch eine eckige Form, beispielsweise eine rechteckige oder quadratische, haben, wobei die Abmessung in einer Richtung nicht größer sein darf als die Breite des Hinterschnittes der Längsnut 410.

Zum Verbinden des Spannbandes 401 mit dem Halter 40 wird der Kopf 45 mit der Kopfplatte 46 voran durch die Eintrittsöffnung 413 in den Hinterschnitt der Längsnut 410 des Spannbandes 401 gedrückt. Bei diesem Vorgang werden die Seitenwände 412 von der Kopfplatte 46 vorübergehend auseinandergebogen. Sobald die Kopfplatte 46 die Eintrittsöffnung 413 passiert hat, federn die Seitenwände 412 in ihre Ausgangslage zurück, wobei die Kopfplatte 46 in die Ausnehmungen 411 eingreift und dadurch in der Längsnut 410 festgehalten wird.

Bei der in Figur 11 gezeigten Halterung weist das Spannband 501 auf seiner Außenseite 504 eine Längsrippe 510 auf, die aus einem sich von der Außenseite 504 nach außen erstreckenden Steg 511 und einem sich an das äußere Ende des Steges 511 anschließenden, sich quer zu dem Steg 511 erstreckenden und beidseitig über den Steg 511 hinausragenden Kopfwulst 512 besteht. Der zur Befestigung des Spannbandes 501 bestimmte Halter 50 ist analog zu dem in Figur 2 gezeigten Halter 10 mit zwei elastisch auseinanderbiegbaren Fingern 57, mit abgebogenen und zueinander hin gerichteten Fingerenden 59 versehen. Beim Andrücken an das Spannband 501 gleiten die Fingerenden 59 über den Kopfwulst 512 hinweg und hintergreifen und den Kopfwulst 512 beiderseits des Steges 511.

Die in der Anmeldung beschriebenen Halter können in Abwandlung zu den beschriebenen Ausführungen auch andere Mittel zu ihrer Befestigung an den Träger 22 haben. Beispielsweise können die Halter mit Klammern oder Ösen versehen sein, die an entsprechenden Vorsprüngen des Trägers festklemmbar sind. Ferner erlaubt die erfindungsgemäße Gestaltung der Halterung eine Ausführung der Halter, bei der diese zuvor durch Kleben oder Schweißen mit dem Träger verbunden werden. Bei dem in Figur 10 gezeigten Halter 40 kann es sich um einen Schweißbolzen aus Metall handeln, der an einen metallischen Träger angeschweißt wird.

## Patentansprüche

1. Halterung für langgestreckte Gegenstände, insbesondere Kabel oder dergleichen, mit einem Spannband (1, 101), das zu einem den Gegenstand (22) umschlingenden und durch einen Verschluß (5, 7) zusammengehaltenen Ring formbar ist, und mit einem von dem Spannband getrennten Halter (10, 30) zum Befestigen des Spannbandes (1, 101) an einem Träger, wobei das Spannband (1, 101) und der Halter (10, 30) an einer Vielzahl von Befestigungsstellen, die sich entlang des Spannbandes (1, 101) befinden, durch an dem Halter (10, 30) und/oder dem Spannband (1, 101) ausgebildete Verbindungsmittel miteinander verbindbar sind und wobei der Halter (10, 30) wenigstens einen Finger (17, 37) aufweist, der mit einem abgebogenen Ende (19, 39) einen Abschnitt des Spannbandes (1, 101) auf der dem langgestreckten Gegenstand (22) zugekehrten Innenseite (2, 102) übergreift und dem abgebogenen Ende (19, 39) des Fingers (17, 37) ein Abstützbereich des Halters (10, 30) gegenüberliegt, der eine Abstützung für die Außenseite des Spannbandes (1, 101) bildet, **dadurch gekennzeichnet, daß** der dem Spannband (1, 101) zugekehrte Abstützbereich des Halters (10, 30) ein Federelement (24, 44) aufweist, das bei der Befestigung des Spannbandes (1, 101) an dem Halter (10, 30) durch das Spannband (1, 101) gespannt wird..

2. Halterung nach Anspruch 1, **dadurch gekennzeichnet, daß** das abgebogene Ende (39) des Fingers (37) das Spannband (1) auf der Innenseite (2) vollständig übergreift und dem abgebogenen Ende (39) des Fingers (37) ein Nocken (42) des Halters (30) gegenüberliegt, der eine seitliche Abstützung für das Spannband (1) bildet.

3. Halterung nach Anspruch 1, **dadurch gekennzeichnet, daß** der Halter (10) zwei Finger (17) aufweist, die beiderseits des Abstützbereiches spiegelbildlich zueinander angeordnet sind und abgewinkelte Fingerenden (19) haben, die das Spannband (1) von zwei Seiten auf der Innenseite (2) übergreifen.

4. Halterung nach Anspruch 3, **dadurch gekennzeichnet, daß** die abgewinkelten Enden (19) der Finger (17) Endflächen (21) haben, die so geneigt sind, daß der Abstand zwischen den Endflächen (21) mit der Entfernung der Endflächen (21) von dem Abstützbereich des Halters (10) zunimmt.

5. Halterung nach einem der vorhergehenden Ansprüche, **dadurch gekennzeichnet, daß** das Spannband (301) auf seiner Innenseite (302) in regelmäßigen, kurzen Abständen sich quer zur Längsrichtung des Spannbandes (301) erstreckende Aussparungen (310) zur Aufnahme wenigstens eines Fingerendes (39) des Halters (30) hat.

6. Halterung nach Anspruch 4, **dadurch gekennzeichnet, daß** das Spannband einen trapezförmigen Querschnitt hat, dessen breitere, parallele Seite auf der Innenseite des Spannbandes liegt.

7. Halterung nach einem der Ansprüche 1 bis 5, **dadurch gekennzeichnet, daß** die seitlichen Längsränder des Spannbandes (201) jeweils eine der Spannbandinnenseite (202) zugekehrte, sich längs des Spannbandes erstreckende Ausnehmung (210) haben.

8. Halterung nach Anspruch 7, **dadurch gekennzeichnet, daß** die Ausnehmungen (210) durch eine vorzugsweise rechtwinkelige Abstufung der seitlichen Ränder des Spannbandes (201) gebildet sind.

9. Halterung nach Anspruch 3, **dadurch gekennzeichnet, daß** das Spannband (101) einen trapezförmigen Querschnitt hat, wobei die kürzere, parallele Seite des Querschnitts sich auf der Innenseite (102) des Spannbandes (101) befindet.

## Claims

1. Suspension for elongated objects, in particular cables or the like, having a tension band (1, 101) formable into a ring encircling the object (22) and held together by a closure (57), and having a holder (10, 30) separate from the tension band for attachment of the tension band (1, 101) to a support, whereby the tension band (1, 101) and the holder (10, 30) are connectable to each other at a plurality of attachment locations located along the tension band (1, 101) by means of connections configured on the holder (10, 30) and/or the tension band (1, 101) and whereby the holder (10, 30) comprises at least one finger (17, 37) one bent end (19, 39) of which overlaps a segment of the tension band (1, 101) on the inside facing the elongated object and the bent end (19, 39) is opposed by a support area of the holder (10, 30) 3 which forms a support for the outside of the tension band (1, 101), **characterised in that** the support area of the holder (10, 30), facing the tension band (1, 101), comprises a spring element (24, 44) which, upon attachment of the tension band (1, 101) to the holder (10, 30), is tensed by the tension band (1, 101).

2. Suspension according to claim 1, **characterised in that** the bent end of the finger (37) completely overlaps the tension band (1) on the inside (2) and that the bent end (39) of the finger (37) is opposed by a cam (42) of the holder (30) forming a lateral support for the tension band (1).

3. Suspension according to claim 1, **characterised in that** the holder (10) comprises two fingers (17) arranged mirror-image-wise to each other on either side of the support area and having angled finger ends (19) overlapping the tension band (1) on the inside (2) from two sides.

4. Suspension according to claim 3, **characterised in that** the angled ends (19) of the fingers (17) have end surfaces (21) so inclined that the distance between the end surfaces (21) increases with increasing distance of the end surfaces (21) from the support area of the holder (10).

5. Suspension according to any of the preceding claims, **characterised in that** the tension band (301) has on its inside (302), at short regular intervals, recesses (310) extending transverse to the lengthwise direction of the tension band (301) to accommodate at least one finger end (39) of the holder (30).

6. Suspension according to claim 4, **characterised in that** the tension band has a trapezoidal cross-section whose wider parallel side is located on the inside of the tension band.

7. Suspension according to either of claims 1 to 5, **characterised in that** the lateral lengthwise edges of the tension band (201) each have an recess (210) extending along the tension band and facing the inside of the tension band (202).

8. Suspension according to claim 7, **characterised in that** the recesses (210) are formed by a preferably rectangular stepping of the lateral edges of the tension band (201).

9. Suspension according to claim 3, **characterised in that** the tension band (101) has a trapezoidal cross-section, the shorter parallel side of the cross-section being located on the inside (102) of the tension band (101).

## Revendications

1. Support de fixation d'objets allongés, notamment de câbles ou similaires, comportant une bande de cerclage (1, 101) pouvant prendre la forme d'un anneau entourant l'objet (22) et maintenu par une fermeture (5, 7), et comportant une attache (10, 30) séparée de la bande de cerclage pour la fixation de la bande de cerclage (1, 101) sur un support, moyennant quoi la bande de cerclage (1, 101) et l'attache (10, 30) peuvent être reliées l'une à l'autre en une pluralité de points de fixation qui se trouvent le long de la bande de cerclage (1, 101) par des moyens de liaison réalisés sur l'attache (10, 30) et/ou sur la bande de cerclage (1, 101), et dans lequel l'attache (30) présente au moins un doigt (17, 37) qui, par une extrémité recourbée (19, 39), chevauche une section de la bande de cerclage (1, 101) sur la face intérieure (2, 102) faisant face à l'objet allongé (22), et une zone d'appui de l'attache (10, 30) est opposée à l'extrémité recourbée (19, 39) du doigt (17, 37) et forme un appui pour la face extérieure de la bande de cerclage (1, 101), **caractérisé en ce que** la zone d'appui de l'attache (10, 30) faisant face à la bande de cerclage (1, 101) présente un élément élastique (24, 44) qui est tendu par la bande de cerclage (1, 101) lors de la fixation de la bande de cerclage (1, 101) sur l'attache (10, 30).

2. Support de fixation selon la revendication 1, **caractérisé en ce que** l'extrémité recourbée (39) du doigt (37) chevauche entièrement la bande de cerclage (1) sur la face intérieure (2) et **en ce qu'**une came (42) de l'attache (30) est opposée à l'extrémité recourbée (39) du doigt (37) et forme un appui latéral pour la bande de cerclage (1).

3. Support de fixation selon la revendication 1, **caractérisé en ce que** l'attache (10) présente deux doigts (17) qui sont disposés symétriquement l'un à l'autre de part et d'autre de la zone d'appui et présentent des extrémités de doigt (19) coudées, qui chevauchent la bande de cerclage (1) des deux côtés sur la face intérieure (2).

4. Support de fixation selon la revendication 3, **caractérisé en ce que** les extrémités coudées (19) des doigts (17) présentent des surfaces d'extrémité (21) qui sont inclinées de telle manière que la distance entre les surfaces d'extrémité (21) augmente lorsque les surfaces d'extrémité (21) s'éloignent de la zone d'appui de l'attache (10).

5. Support de fixation selon une des revendications précédentes, **caractérisé en ce que** la bande de cerclage (301) présente sur sa face intérieure (302), à intervalles rapprochés et réguliers, des évidements (310) s'étendant transversalement à la direction longitudinale de la bande de cerclage (301), destinés à recevoir au moins une extrémité de doigt (39) de l'attache (30).

6. Support de fixation selon la revendication 4, **caractérisé en ce que** la bande de cerclage présente une section trapézoïdale dont le côté parallèle large se trouve sur la face intérieure de la bande de cerclage.

7. Support de fixation selon une des revendications 1 à 5, **caractérisé en ce que** chacun des bords longitudinaux latéraux de la bande de cerclage (201) présente respectivement un évidement (210) faisant face à la face intérieure (202) de la bande de cerclage et s'étendant le long de la bande de cerclage.

8. Support de fixation selon la revendication 7, **caractérisé en ce que** les évidements (210) sont formés par un étagement de préférence à angle droit des bord latéraux de la bande de cerclage (201).

9. Support de fixation selon la revendication 3, **caractérisé en ce que** la bande de cerclage (101) présente une section trapézoïdale, le côté parallèle court de la section se trouvant sur la face intérieure (102) de la bande de cerclage (101).
